Europäisches Patentamt

European Patent Office

Office européen des brevets

(11) Publication number: **0 110 838**
A1

(12) # EUROPEAN PATENT APPLICATION

(21) Application number: 83830214.9

(22) Date of filing: 29.10.83

(51) Int. Cl.³: **B 60 C 27/04,** B 60 C 27/12

(30) Priority: 12.11.82 IT 359182

(43) Date of publication of application: 13.06.84
Bulletin 84/24

(84) Designated Contracting States: AT BE CH DE FR GB LI
LU NL SE

(71) Applicant: SUNFILTER s.r.l., Via Manin 6,
I-40033 Casalecchio di Reno (IT)

(72) Inventor: Lancellotti, Giordano, Via Manin, 8,
I-40033 Casalecchio di Reno (IT)

(74) Representative: Rinaldi, Carlo, c.o. Studio Brevetti
Nazionali ed Esteri dell'Ing. Carlo Rinaldi & C. s.d.f. Via
Aristide Busi, 1, I-40137 Bologna (IT)

(54) Anti-skid assembly for motor vehicle tires.

(57) An antiskid mountable structure for motor vehicle wheels,
comprising a central ring (1), suitable to be placed concentric-
ally to the wheel hub and a predetermined number of lugs (6),
provided with means capable of cutting the ice or biting on the
snow, to ensure the vehicle forward motion; the said lugs (6)
are shaped in such a way as to encircle the tread (18) and, at
least in part, the tyre (13) sides.

Each lug (6) is provided with a prismatic end (5) of
adequate length; to the said central ring (1) are connected
guide means (3), each of them being provided with a recess (4)
to house and guide the end (5) of any of the lugs (6).

A spring (10) controls the axial movements of each lug (6),
caused by the deformation of the tyre (13), being placed be-
tween two fastening means (8, 7) belonging to the lug (6) and
to the ring (1), respectively; the said spring (10) being provided
with a means (11a-c) capable of limiting its stretching.

ANTISKID ASSEMBLY FOR MOTOR VEHICLE TYRES

The invention relates to a mountable structure to be fitted to the driving wheels of motor vehicles in order to prevent them from skidding on snowy or icy roads; more precisely, it refers to a structure which is easy to fix to the tyres and which provides a dependable and effective antiskid action in the most severe weather conditions of roads during the winter season.

There exist already fixtures meant to keep the grip between tyres and road, in case of snowy or icy roads; among such fixtures are chains, spikes fitted in the tyre tread and stiff structures consisting of frames with bent parts or sections, capable of following the tyre profile so as to constitute a gripping means on snow or ice.
The main disadvantages of the chains are the following: it is difficult to put them on and off the driving tyres, and especially to hook the chain on the inner side of the wheel; they require uncomfortable handling which quite often cannot be perfectly carried out and if this happens, both the chain and the tyre can abnormally wear out; in case the chain should break apart, although not completely, driving could become very dangerous unless the chain itself is not replaced or repaired very quickly.
In the case of spikes, the main disadvantage is that they cannot be fitted by the driver, but the job must be carried out in a specialized shop.
The known frames have the disadvantage to be made of stiff structures which, during the use, make the travel particularly uncomfortable because of the jerks and vibrations transmitted to the vehicle; this is mainly due to the fact that during the motion the tyre modifies its shape owing

2    0110838

to the weight and centrifugal forces that put it under strain on areas which vary continually in time, whereas the surrounding frame undergoes no deformation; the difference between the dynamical behaviour of the two components tyre-frame, which work very closely to move the vehicle forward, causes a jolting motion that is uncomfortable for the passengers as well as dangerous for the vehicle structure itself.

The main purpose of this invention is to overcome these problems though a structure that works together with the tyre in order to move the vehicle forward on icy or snowy roads, undergoing during operation the same distortions experienced by the tyre on which it is mounted.

Another purpose of this invention is to provide a structure of the type above described, which can be fitted very quickly onto the tyre in all road conditions and without special skill by the driver.

Another purpose of this invention is to provide a structure of the type above described, on which the deteriorated or worn parts can be easily replaced.

A last, but not less important purpose of this invention is to provide a structure of the type above described, that is better suitable than the known ones for the use for which it is meant, being the result of a technology aimed at providing cost-saving components and a correct sizing of the parts composing the said structure, so that the same can withstand wear as long as possible.

These and other advantages are achieved with this invention, which is characterized by the contents of the claims; other purposes, features and advantages of the invention will be outlined, by referring to the accompanying drawings, which show two preferable but non-restrictive manufacturing methods of the present invention.

- Fig. 1 is a general view of the invention, to illustrate all its details;
- Fig. 2 illustrates the fitting method of a single component of the invention;
- Fig. 3 illustrates a constructive alternative of the invention;
- Fig. 4 illustrates construction details of the structure shown in Fig. 2.

Referring to drawing 1, we note that the invention is composed by a ring 1, which is stiff and suitable for being placed concentrically to the wheel hub of the vehicle; on the said ring 1 six guide members 3 are fixed, projecting radially from the said ring 1; each of the said members 3 presents an inner prismatic recess 4 suitable for housing the prismatic end 5 of a lug 6, so that the same can slide inside it along the common axes. The said ring 1 is also fitted with six hooks 7, each of them projecting upwards from the said ring 1 and being generally arranged on the midplane 2 of the said guide member 3.

Each lug 6 is provided with a fastening means 8 for the end 9 of a spring 10, whose second end 11 is linked to a ring 12 suitable for being attached to the hook 7, with the purpose of keeping together the invention on a tyre 13. Each spring 10 is provided with a tailpiece 11a, made up by the same spring wire, which, starting from the said second end 11, runs for the whole length of the spring 10, outside the spring itself, and also for a longer portion 11b; the said piece 11a has a bent portion 11c and a lower portion 11d which faces the inside of the spring when the spring is unloaded and enters the spring coils when the spring is stretched; the length of portion 11b has been chosen in such a way as to prevent overstretching of the spring 10 under the action of centrifugal forces during the vehicle motion or under the action of muscular strength when the structure is being mounted on the tyre 3, in order to prevent the ends 5 of the said lugs 6 from slipping out of the relevant guides 4.

Each lug 6 is provided with a section 14 capable of following the contour of the tyre 13 during operation; the said section 14 is also provided with an end 15 which, during operation, wraps the side of the tyre 13 facing the inside of the vehicle, by following the tyre contour. Finally, the said section 14 is provided with an outer bead, whose length is practically equal to the tread 18 of the tyre 13; such bead has two sharpened edges 17a and 17b, meant to cut the ice or provide more bite on the snow.

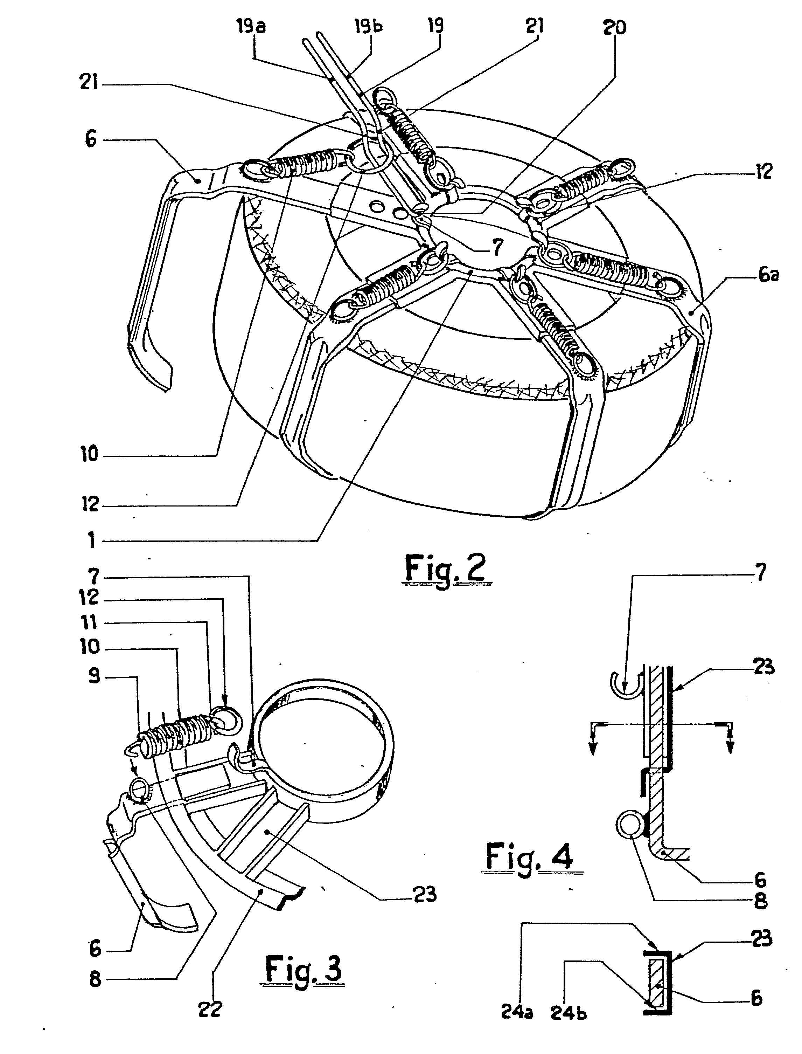

Fig. 2 illustrates the mounting of the lug 6 on the tyre 13, once all other lugs have been mounted. This drawing shows that the end 5 of lug 6 is already partially inserted into the recess 4 of the guide member 3. Sliding of the lug 6 into its housing can be easily achieved by hand, until its section 14 hits the tread 18. On the contrary, to hook the ring 12 of spring 10 onto the hook 7, and thus to make spring 10 accomplish its task of elastically connecting its lugs 6 to the ring 1, it is necessary to make use of a fork-type tool 19. The said tool 19 is constituted by a metal section, suitably sized to withstand the efforts required during the assembly and disassembly operations of the present structure, which will be explained later on; the tool is provided with a semicircular bend 20 and a flexed section 21 dividing the tool 19 in two parts, the first one comprising the said semi-circular bend 20 and the second comprising the open ends 19a and 19b of the said tool 19; the said flexed section 21 having the purpose during the use to prevent the ring 12 from passing from the side where it should be to the opposite side of the tool 19.

Fig. 3 illustrates a manufacturing modification of the invention. A central ring 1 is connected to a second round structure 22 by means of some U-sections 23 (Fig. 4); each section 23 is provided with two shoulders 24a and 24b, having a distance equal to the width of the end 5 of the said lug 6, so as to allow the end 5 to slide along the axis of the section 23, i.e. radially with respect to the structure.

As illustrated in Fig. 4, the structure 22 is obtained by a metal section, which is provided in a section with a plane comprising the axis of symmetry of the invention with a flexed section 25, having a generally straight central part and connecting the section 23, located in mounting conditions behind the end 5, with a metal structure 26, situated in front of it. The ring-like structure 22 constitutes a rotating assembly, around the axis of symmetry of the invention, of the said flexed section 25 and of the said structure 26; in such assembly there is provided a cylindrical surface 25a, originated by the rectilinear part of the flexed section 25.

For each section 23, the structure 22 is provided with a slot 27, obtained in the said surface 25a; such slot 27 causes the end 5 of a lug 6 to penetrate into the section 23. The structure 26 serves the purpose of preventing the lugs 6 from moving outwards, whereas side movements are limited by the shoulders 24a and 24b and inward movements are prevented by the tyre.

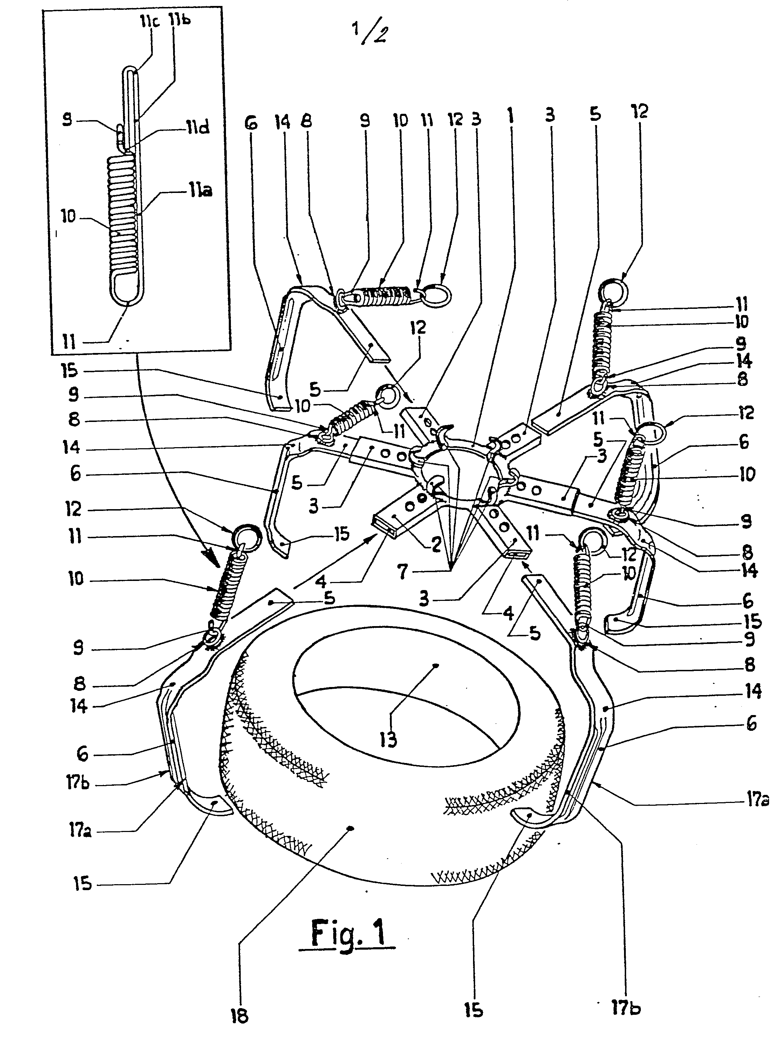

Components which have been already described in Fig. 1, 2 are also used for the version illustrated in Fig. 3 and 4, therefore they have been marked with the same numbers; obviously their desciption is not repeated.

The version illustrated by the Fig. 3 and 4 may be manufactured from stamped plates and therefore it is very convenient from an economical point of view.

The mounting of the present structure on a tyre is now described in detail.

Referring to Fig. 2, let us imagine that the tyre 13 is stuck in the snow and that the said structure is not mounted yet. For this operation it is necessary first of all to place the ring 1 concentrically to the wheel hub and to insert the end 5 of a lug 6 into the recess 4 of a guide member 3, paying attention to position the said lug on the tyre section closest to the ground; to this purpose it is necessary to remember that the sections 14 and 15 of the lug should encircle the tread 18.

Then the tool 19 is to be inserted into the ring 12, by taking care that the said ring 12 is situated in the part of the said tool 19 comprised between the flexed section 21, turned outwards, and the semi-circular bend 20. After having secured the said bend 20 in the hook 7, lift the tool 19 by pulling with a hand its ends 19a and 19b; the ring 12 slides from the flexed section 21 to the bend 20 under the lever action constituted by the tool 19 hinged on hook 7 and once there, it catches the said hook 7.

After having fixed the first lug, it is advisable to mount according to the above described method the diametrically opposite lug (6a in Fig. 2), in order to provide the structure with a certain grip stability on the tyre 13; thereafter the other lugs are mounted.

It is to be noted that in case of very high snow, the mounting of three lugs only may enable the wheel, driven by the engine power, to move forward sufficiently to get over a possible unevenness of the ground, in order to complete the mounting of the other lugs on a more even surface. In the case that the central ring 1 should not be exactly coaxial during mounting with the wheel hub, it could happen that the effort to fasten the ring 12 into the hook 7 would be so great as to stretch the spring 10 beyond its yield point. This is prevented by the said tailpiece 11a, that restricts the stretching of the said spring 10 to the distance 11d; the extension of the spring 10 stops in fact when the bent section 11d of the said tailpiece hits the first turn of the spring 10 on the side of end 9, thus telling the user that it is advisable to correct the mounting of the said structure on the tyre 13.

The demounting of the structure from the tyre 13 is carried out by using the tool 19 in the opposite way, that is by inserting its ends 19a and 19b between the ring 12 and the central ring 1, taking care that the flexed section 21 is looking outwards; after having so inserted the tool 19, this is lowered against the edge of ring 1 and the ring 12 is extracted from the hook 7; then it is advisable to lower the tool 19 so that the ring 12 can reach the flexed section 21 under the action of the spring 10; the end 5 of the lug is then extracted from the relevant recess 4 and one should proceed similarly with the remaining five lugs.

It is to be noted that the quickness of assembling and disassembling procedures of the said structure is particularly useful when driving on roads where the snow or ice covering is limited to short stretches, which however would be absolutely insuperable for a vehicle not suitably equipped.

It is also to be noted that the present structure conforms to the tyre distortions during the motion; in fact the ends 5 of the lugs 6 can slide in their guides (4 and 23) according to the tyre radial direction, with controlled movements which are restricted outwards by the springs 10 fitted with the said tailpieces 11a and inwards by the tread 18 of the tyre 13, to which the lugs remain steadily in contact thus avoiding those jerks wearing out the tyres and the vehicle axles.

These are only two possible constructive versions of the invention, which may be subject to modifications not affecting its essence; in particular the number of lugs may be changed in compliance with the tyre size, as the number of six lugs is by no means restrictive. In another constructive configuration, the hollow sections may be locate on the end 5 of the lugs to house members projecting radialy from the ring 1; finally the springs 10 may be secured to the said ring 1 and be detachable on the said lugs 6. Shapes, dimensions and used materials do not restrict the scope of the present invention, in which each component may be replaced by another equivalent part.

CLAIMS

1. An antiskid mountable structure for motor vehicle tyres, comprising at least one central ring suitable for being placed concentrically to the wheel hub and a predetermined number of lugs, provided with means to cut the ice or bite on the snow, in order to enable the vehicle to move forward on snowy or icy roads, said lugs being shaped in such a way as to encircle the tread and, at least partly, the tyre sides; said structure being characterized by the fact that the said central ring can be connected to the lugs by means of first members fixed to the said ring and arranged radially outside it and by means of second members constituted by the straight end of each lug; being the said first and second members capable of working together to allow the said second members to move along the axis of the said first members under the control of elastic means; the said elastic means being constituted by the tyre and for each lug, by a spring located between a first fastening system fixed to the said central ring and a second fastening system, fixed to the said lug; the said spring being detachable from at least one of the said fastening systems.

2. A structure as claimed in Claim 1, in which each of the said first means is constituted by a structure having an inner recess suitable to house and guide along its axis any of the said second means.

3. A structure as claimed in Claim 1, in which each of the said second means is constituted by a structure having an inner recess suitable to house and guide along its axis any of the said first means.

4. A structure as claimed in Claim 1, in which the said central ring is firmly connected to a second ring-like concentrical structure by means of a predetermined number of U-sections; each of the said sections being provided with a surface facing the outer side of the tyre and two side shoulders to house and guide along its axis any of the said second means; the second ring-like structure being an assembly generated by the revolution, around the center line of the whole structure, of structural means constituted by a flexed section and by a part which, when the structure is completely assembled, is located outside any of the said second means in order to prevent them from moving outwards from the tyre; the said flexed section connecting the said part with any of the said sections and having a substantially straight area, originating a cylindrical surface crossing the said assembly, in which cylindrical surface there are provided slots corresponding to each section in order to allow the insertion of the said ends of the said lugs into each section.

5. A structure as claimed in any of Claims 1 to 4, in which each first fastening means for each spring of each lug is suitable to permit the fastening and unfastening of the said spring by means of a special tool.

6. A structure as claimed in Claims 1 to 4, in which each fastening means for each spring of each lug is suitable to permit the fastening and unfstening of the said spring by means of a special tool.

7. A structure as claimed in Claim 1, in which each of the said springs is provided with a tailpiece, made of the wire of the same spring, which, starting from the end fixed to the firm hook, runs for the whole length of the said spring, outside it, and extends beyond it for a predetermined length; the said tailpiece being provided with a bent section and a wire portion, whose lower end faces the inside of the spring itself, when not loaded, and enters it, when the spring is stretched; the said predetermined length having been chosen in such a way as to prevent overstretching of the said spring under the action of centrifugal forces originated by the wheel motion and under the action of the muscular strength required to mount the structure on the tyre; such means stopping the spring stretching when the said bent section hits the first turn, which is located in the spring on the side opposite to the end from which the said tailpiece starts; the said spring with the said tailpiece being suitable to prevent the said seconds means from sliding out of the said first means during the vehicle motion or during the fitting of the present structure on a tyre.

8. A structure as claimed in Claims 5,6 and 7, in which the said tool is constituted by a metal sheet section having a semi-circular bend and a flexed section, dividing the said tool in two parts; the first one comprising the said semi-circular bend and the second comprising the open ends of the said tool; the said bend being suitable to be hinged on any of the said fastening means from which the spring can be detached; the two open ends constituting a point of support on the structure as per the invention, in order to detach the said spring and the said flexed section being suitable to prevent the end of the said spring from sliding from the part where it is to the opposite part of the said tool.

9. A mountable antiskid structure for motor vehicle tyres, according to any of the previous Claims, as herein illustrated and described.

0110838

1/2

Fig. 1

0110838

**Fig. 2**

**Fig. 3**

**Fig. 4**

European Patent Office

0110838

**EUROPEAN SEARCH REPORT**

Application number

EP 83 83 0214

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US-A-2 873 783 (O'HIGGINS) <br> * Column 1, lines 45-55; figures 1,2 * | 1,7,9 | |
| A | US-A-2 169 950 (HAMALAINEN) <br> * Whole document; figures 1-3 * | 1 | |
| A | DE-A-2 404 902 (ERLAU) <br> * Whole document; figures 1-4 * | 8 | |
| A | CA-A-1 075 138 (CHABOT) <br> * Whole document; figures 1-4 * | 1,5,9 | |
| A | US-A-1 489 736 (BRUNDAGE) <br> * Whole document; figures 1,2 * | 7 | |
| P,X | DE-A-3 148 058 (STEHLE) <br> * Page 4, line 15 - page 5, line 11; figure 2 * | 1,6,9 | TECHNICAL FIELDS SEARCHED (Int. Cl. ³) |

The present search report has been drawn up for all claims

| Place of search <br> THE HAGUE | Date of completion of the search <br> 16-02-1984 | Examiner <br> AYITER I. |
|---|---|---|

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 520 125  (MEZZACAPO)  * Page 8, line 17 - page 9, line 12; figures 2,10,11 * | 1,2,4, 9 | B 60 C  27/04 B 60 C  27/12 |
| A | US-A-2 896 686  (BORITZ)  * Column 2, line 3 - column 3, line 21; figures 1-7 * | 1,4,6, 9 | |
| A | FR-A-2 377 896  (MONTEIL)  * Page 1, line 39 - page 3, line 10; figures 1-3 * | 1,2,4, 9 | |
| A | US-A-1 600 276  (DOMBOWSKY)  * Page 1, lines 32-87; figures 1-3 * | 1,2,4, 9 | TECHNICAL FIELDS SEARCHED (Int. Cl. 3) |
| A | US-A-3 016 079  (WELLER)  * Column 3, lines 11-73; figures 1,2,4,5 * | 1,2,4, 9 | B 60 C  27/00 |
| A | FR-A-2 391 087  (LEGOUX)  * Whole document; figures 1,2 * | 1,2,4, 9 | |

---            -/-

The present search report has been drawn up for all claims

| Place of search THE HAGUE | Date of completion of the search 16-02-1984 | Examiner AYITER I. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82